# EUROPEAN PATENT SPECIFICATION

(11) **EP 0 699 631 B1**
(45) Date of publication and mention of the grant of the patent: **25.11.1998**
(21) Application number: 94202439.9
(22) Date of filing: 25.08.1994
(51) Int. Cl.: C02F 3/06, C02F 3/10, C02F 3/34

(54) **Method for reducing the odour emission of water streams arising in the food industry**
Verfahren zur Minderung der Geruchsemission von in der Lebensmittelindustrie entstehenden Wasserströmen
Procédé pour réduire l'émission d'odeur d'un courant d'eau provenant de l'industrie d'alimentation

(30) Priority: 25.08.1993 NL 9301475
(43) Date of publication of application: 06.03.1996
(73) Proprietor: CSM SUIKER B.V., NL-1112 EX Diemen-Zuid II (NL)
(72) Inventor: Joosten, Bernardus Petrus Augustinus, NL-9756 AA Glimmen (NL); Mencke, Hendricus Franciscus, NL-9801 NE Zuidhorn (NL); Schutter, Michel Adrianus Theresia, NL-9766 TS Eelderwolde (NL); Baar, Jan, NL-9801 LB Zuidhorn (NL); Wind, Evert, NL-3997 MT 't Goy (NL)
(74) Representative: de Bruijn, Leendert C.

(56) References cited:
- DE-A- 2 815 507
- DE-A- 2 927 015
- US-A- 4 439 316
- PATENT ABSTRACTS OF JAPAN vol. 7, no. 11 (C-145) (1156) 18 January 1983 & JP-A-57 170 181 (NISHIHARA KANKIYOU EISEI KENKYUSHO K.K.) 20 October 1982
- DATABASE WPI Week 8214, Derwent Publications Ltd., London, GB; AN 82-27520E & JP-A-57 035 994 (GODO SHUSEI) 26 February 1982

## Description

The invention relates to a method for reducing the odour emission at the direct cooling of elevated-temperature water streams occurring in the food industry.

In the food industry, such as, for example, in the production of sugar from sugar beets, odour emissions which exceed permissible standards are produced during various stages at various points in the sugar production process. In other food industries too, as in the potato starch industry, potato processing industry, fat and oil industry and whey processing industry, the abovementioned evil occurs to a greater or lesser extent.

The object of the invention therefore is to develop an odour emission reduction method which provides an adequate solution for the abovementioned problem and is feasible both on a technical and on economical scale. The standard proposed for such a reduction method was a decrease in the odour emission of 80%.

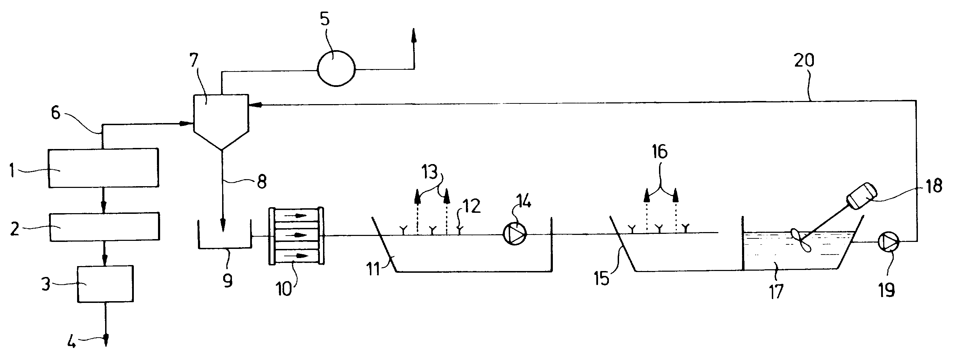

One of the applications of such an odour emission reduction method should be suitable for reducing the odour emission of the condenser water obtained in sugar production, which water, as shown in Figure 1, comes from evaporating pans used in said production. Said condenser water, which has a temperature of 55°C, is discharged to a spray pond where it is cooled to a temperature of approximately 25°C. By evaporation of the condenser water above the spray pond, odorants are, however, given off to the ambient air, which give rise to an undesirable smell. An undesirable smell is thus produced in spite of the fact that degradation of odorants takes place by the bacteria present in the spray pond.

Further from DE-A-2,927,015 a process is known for controlling a microbiological converting process in liquid manure by means of a heat transfer system according to which the solid components of the liquid manure are degraded by thermophilic microorganisms. Next to said degradation the thermophilic microorganisms provide a considerable reduction of the odour emission of the manure. However, according to this known process a forced aeration of the liquid manure has to be carried out which requires the use of a separate aeration means.

It has now been found that the odour emission of a water stream as mentioned in the preamble, can be reduced efficiently if the water stream is brought into contact, at a temperature in the range of 45-60°C in a closed reactor without aeration, with aerobic thermophilic microorganisms which are capable of reducing the odour emission.

In the method according to the invention, the water stream is advantageously passed along solid supports with thermophilic microorganisms immobilized thereon. Examples of such solid supports are Pall rings, Raschig rings, Berl saddles, McMahon saddles and other types of packing rings. Preferably, the supports are disposed so as to be immobile.

Any preference of the microorganisms for a particular type of material such as, e.g., rubber, plastic or stainless steel has hitherto not been detected.

As a particular embodiment of such supports, the walls of pipes having a relatively small diameter, advantageously 20-50 mm, may be mentioned, on which walls the microorganisms are able to settle. Systems provided with such pipes having a relatively small diameter include, for example, the commercially available heat exchangers.

Another embodiment, in which pipes having a relatively small diameter can be used, relates to a pipe having a relatively large diameter which internally is provided with a multiplicity of pipes having a small diameter. Such a pipe construction may, for example, be composed of a pipe having a diameter of 900 mm and a length of 10 m, which is provided with approximately 668 tubes of, e.g., PVC (poly(vinylchloride)) having a diameter of 32/27 mm. Thus, an adhesion surface of 575 m² is created for the thermophilic microorganisms. The advantage of such a pipe construction having a length of 10 m is that, in addition to the large adhesion surface, the hydraulic resistance is also relatively small. This implies that, if water having a low velocity of 0.5 m/s flows into the tubes, the entrance and friction loss is very small, so that sufficient pressure remains available for the subsequent spraying of the treated water.

In view of the results of the experiments in the following example, dimensions of 0,7 - 2 m² of film of thermophilic microorganisms per m³/h of water flow at a temperature of approximately 55°C are considered to be sufficient. However, under different conditions such as a lower temperature and the like, other film dimensions per m³/h of water flow may be required.

Concerning the contact time between the water flow to be treated and the thermophilic microorganisms it is brought to the fore that this parameter is in the range of 20-100 seconds, preferably 20-50 seconds.

For the sake of completeness it is stated in respect of the quality of the water flows, which can be used according to the invention, that the COD (Chemical Oxygen Demand) is between 50 and 150 mg/l and normally about 78 mg/l and the BOD (Biological Oxygen Demand) is between 5 and 80 mg/l and normally about 27 mg/l; these COD and BOD values of the water flow are hardly affected by the process according to the invention.

Further, in the method according to the invention the various types of thermophilic bacterium species may be used which are encountered, for example, in purification installations with sludge loads of ≥0.25 BOD/kg (BOD = Biological Oxygen Demand). Examples of such types are *Sphaerotilus natans*, *Haliscomenobacter hydrossis*, *Flavobacterium sp*., *Thiothrix sp*. and *Beggiatoa sp*. Regarding the presence of such bacteria it is necessary to point out that the general constraints for their viability in the water stream, such as pH, COD (Chemical Oxygen Demand) and oxygen and nitrogen content should be met. For example, if pipes having a small diameter are used, there should still be sufficient oxygen present at the downstream side thereof to allow the aerobic thermophilic bacteria to thrive. In this respect it is remarked yet that during the microbiological reaction between the thermophilic microorganisms and the water flow no aeration and no heat supply or removal is carried out.

As can be seen from the following example, the water stream used is the condenser water arising in sugar production (see Figure). The odour units (OU/m³) are determined according to a draft Dutch standard 2820, in which a panel of at least 8 persons carries out the assessment.

### LEGENDS

- Figure :: This Figure relates to an installation used in current sugar production. More in particular, in the evaporating station, comprising one or more evaporating pans (1), coolers (2) and centrifuges (3), the extracted beet juice is crystallized to give sugar (4). The steam coming from the evaporating station is passed, by means of a pressure drop via line (6), to a condenser (7) wherein the vapour condenses and which condensing provides the pressure drop. A vacuum pump (5) removes the non-condensable gases like N₂, CO₂ and O₂. Thence the condenser water is conveyed, at a temperature of approximately 55°C, via line (8) into a collection tank (9). From this tank (9) the condenser water is passed via a reactor (10) comprising three biopipes and two headers and subsequently to a number of sprinklers (12), to a first cooling pond (11). The condenser water sprayed in the cooling pond, however, causes odour emission (13) at the inlet point. Subsequently the condenser water in cooling pond (11) is sprayed in the cooling pond (15), resulting in an odour emission (16). The water present in said cooling pond (15) streams to aeration pond (17) provided with aeration means (18). Then the water is returned, by means of pump (19) via line (20), to condenser (7).

### EXAMPLE

In this example, the installation shown in the Figure is used. By means of such an installation it has been possible to contact the total flow of the condenser water obtained in the sugar production with the microorganisms present in the biopipes (10).

With respect to the construction of the biopipes (10) it is brought to the fore that these consist of three parallel pipes which are arranged next to each other and horizontally. In Table A below, both construction and process parameters of the biopipes are shown.

**TABLE A**

| | Biopipes |
|---|---|
| Diameter of biopipes | ca. 900 mm |
| Number of biopipes | 3 |
| Number of tubes in biopipes | 3 x 668 = 2004 |
| Length of tubes | 10 m |
| Internal diameter of tubes | 27.2 mm |
| Total contents of tubes | 3 x 4.87 = 14.6 m³ |
| Total adherent surface of tubes | 3 x 575 = 1725 m² |
| Material of the tubes | polyvinylchloride |
| Residence time of the condenser water in the biopipes | 28 sec. |
| Flow rate of condenser water | ± 1900 m³/h* |
| Temperature of the supplied condenser water | 55°C |

| | |
|---|---|
| *The flow rate varies between 1500 and 2400 m³/h | |

The internal surface of the tubes was provided with a film of filamentous bacteria such as *Sphaerotilus natans* (various types), *Haliscomenobacter hydrossis*, *Flavobacterium sp*. (type 1701), *Thiothrix sp*. and *Beggiatoa sp*.

Data of the condenser water directed into the biopipes are mentioned in Table B below.

**TABLE B**

| Average results of untreated condenser water (before the biopipes). Period 13-9-93/15-12-93 | | | | |
|---|---|---|---|---|
| | Number | Average | Min. | Max. |
| Odour (ge/m³) | n=31 | 166* | 75 | 375 |
| CZV_{c} (mg/l) | n=20 | 75 | 48 | 106 |
| BZV_{f} (mg/l | n=17 | 27 | 5 | 46 |
| Kj-N (mg/l) | n=19 | 32 | 15 | 46 |
| pH | n=34 | 7.5 | 7 | 8.9 |
| O₂ (mg/l) | n=41 | 3.2 | 1.6 | 6.5 |

| | | | | |
|---|---|---|---|---|
| * too low, partly treated by long supply line to the sprinklers | | | | |

The results shown in Table C are achieved by means of the treatment of the condenser water in the biopipes.

**TABLE C**

| Average results of treated condenser water (after the biopipes); odour emission (13) in the figure. Period: 13-9-93/15-12-93. | | | | |
|---|---|---|---|---|
| | Number | Average | Min. | Max. |
| Odour (ge/m³) | n=29 | 105 | 55 | 190 |
| CZV_{c} (mg/l) | n=20 | 78 | 54 | 156 |
| BZV_{f} (mg/l) | n=14 | 26 | 9 | 80 |
| pH | n=34 | 7.5 | 6.9 | 8.9 |
| O₂ (mg/l) | n=41 | 2 | 0.9 | 3.3 |

As indicated in the Figure the treated condenser water, present in the first cooling pond (11), is subsequently conveyed to a second cooling pond (15) and then led to an aeration pond (17) wherein the water is aerated by means of means (18). The data of the condenser water obtained in this way are mentioned in Table D below.

**TABLE D**

| Average results of aerated condenser water; odour emission (16) in the figure; Period: 13-9-93/15-12-93. | | | | |
|---|---|---|---|---|
| | Number | Average | Min. | Max. |
| CZV_{c} (mg/l) | n=17 | 70 | 49 | 101 |
| BZV_{f} (mg/l) | n=14 | 19 | 8 | 36 |
| pH | n=33 | 8.2 | 7.9 | 8.4 |
| O₂ (mg/l) | n=38 | 5.2 | 3.5 | 7 |

For the sake of completeness it is remarked that at the first spraying (in cooling pond 11) and the second spraying (in cooling pond 15) respectively, a temperature drop of the condenser water of 17°C and 8°C respectively is obtained.

During the process according to the invention the pH of the condenser water remains more or less the same and varies from min. 7.4 to max. 8.3.

The oxygen content of the condenser water decreases during the treatment in the biopipes (from average 3.2 to 2.0 mg/l) and increases strongly during the spraying (from average 2.0 to 5.2 mg/l).

Resuming it is stated that the odour emission reduction of the total quantity of condenser water of a sugar production installation (± 1900 m³/h), which is achieved according to the invention and carried out without aeration in the closed reactor, is to be considered surprising.

## Claims

1. Method for reducing the odour emission at the direct cooling of elevated-temperature water streams occurring in the food industry, characterized in that the water stream is brought into contact, at a temperature in the range of 45-60°C in a closed reactor without aeration, with aerobic thermophilic microorganisms which are capable of reducing the odour emission.

2. Method according to Claim 1, characterized in that the water stream is passed along solid supports with thermophilic microorganisms immobilized thereon.

3. Method according to Claim 2, characterized in that the water stream is passed along the solid immobile supports with thermophilic microorganisms immobilized thereon.

4. Method according to Claim 3, characterized in that the solid immobile support used is the wall of one or more pipes.

5. Method according to one or more of Claims 1-4, characterized in that the thermophilic bacteria used are *Sphaerotilus natans*, *Haliscomenobacter hydrossis*, *Flavobacterium sp*., *Thiothrix sp*. and/or *Beggiatoa sp*.

6. Method according to one or more of Claims 1-5, characterized in that 0,7 - 2 m² of film of thermophilic microorganisms per m³/h water flow is used.

7. Method according to one or more of claims 1-6, characterized in that the used contact time between the water stream and the thermophilic microorganisms is 20-100 seconds.

8. Method according to claim 7, characterized in that the used contact time between the water stream and the thermophilic microorganisms is 20-50 seconds.

9. Method according to one or more of Claims 1-8, characterized in that the "condenser water" arising in sugar production is used as the water stream.

10. Installation suitable for implementing the method according to one or more of Claims 1-9, characterized by a supply line, an element connected thereto and composed of pipes, the wall of the pipes being provided with a film of aerobic thermophilic microorganisms, and a discharge line.

11. Installation according to Claim 10, characterized in that the element composed of pipes represents one or more pipes which are internally provided with a multiplicity of pipes arranged in parallel having a smaller diameter which is in the range of 20-50 mm.

## Patentansprüche

1. Verfahren zur Minderung der Geruchsemission beim direkten Kühlen von in der Lebensmittelindustrie auftretenden Wasserströmen mit erhöhter Temperatur,
dadurch **gekennzeichnet**, daß
der Wasserstrom bei einer Temperatur im Bereich von 45 bis 60°C in einem geschlossenen Reaktor ohne Belüftung mit aeroben thermophilen Mikroorganismen in Kontakt gebracht wird, welche die Geruchsemission vermindern können.

2. Verfahren nach Anspruch 1,
dadurch **gekennzeichnet**, daß
der Wasserstrom an festen Trägern mit darauf immobilisierten thermophilen Mikroorganismen entlanggeführt wird.

3. Verfahren nach Anspruch 2,
dadurch **gekennzeichnet**, daß
der Wasserstrom an festen unbeweglichen Trägern mit darauf immobilisierten thermophilen Mikroorganismen entlanggeführt wird.

4. Verfahren nach Anspruch 3,
dadurch **gekennzeichnet**, daß
der verwendete feste unbewegliche Träger die Wand einer oder mehrerer Röhren ist.

5. Verfahren nach einem der Ansprüche 1 bis 4,
dadurch **gekennzeichnet**, daß
es sich bei den verwendeten thermophilen Bakterien um Sphaerotilus natans, Haliscomenobacter hydrossis, Flavobacterium-Arten, Thiothrix-Arten und/oder Beggiatoa-Arten handelt.

6. Verfahren nach einem der Ansprüche 1 bis 5,
dadurch **gekennzeichnet**, daß
pro m³/h Wasserstrom ein Film aus thermophilen Mikroorganismen mit einer Fläche von 0,7 bis 2 m² verwendet wird.

7. Verfahren nach einem der Ansprüche 1 bis 6,
dadurch **gekennzeichnet**, daß
die Kontaktzeit zwischen dem Wasserstrom und den thermophilen Mikroorganismen 20 bis 100 s beträgt.

8. Verfahren nach Anspruch 7,
dadurch **gekennzeichnet**, daß
die Kontaktzeit zwischen dem Wasserstrom und den thermophilen Mikroorganismen 20 bis 50 s beträgt.

9. Verfahren nach einem der Ansprüche 1 bis 8,
dadurch **gekennzeichnet**, daß
das "Kondensatorwasser", das bei der Zuckerherstellung auftritt, als Wasserstrom verwendet wird.

10. Anlage, die sich zur Durchführung des Verfahrens nach einem der Ansprüche 1 bis 9 eignet, **gekennzeichnet** durch eine Zuführleitung, ein damit verbundenes und aus Röhren zusammengesetztes Element, wobei die Wände der Röhren mit einem Film aus aeroben thermophilen Mikroorganismen versehen sind, sowie eine Abgabeleitung.

11. Anlage nach Anspruch 10,
dadurch **gekennzeichnet**, daß
das aus Röhren zusammengesetzte Element eine oder mehrere Röhren darstellt, die im Inneren mit einer Vielzahl von Röhren versehen sind, die parallel angeordnet sind und einen kleineren Durchmesser im Bereich von 20 bis 50 mm haben.

## Revendications

1. Procédé pour réduire l'émission d'odeur lors du refroidissement direct de courants aqueux à température élevée se présentant dans l'industrie alimentaire, caractérisé en ce que le courant aqueux est mis en contact, à une température située dans l'intervalle de 45 à 60°C dans un réacteur clos sans aération, avec des microorganismes thermophiles aérobies qui sont capables de réduire l'émission d'odeur.

2. Procédé selon la revendication 1, caractérisé en ce qu'on fait passer le courant aqueux le long des supports solides sur lesquels sont immobilisés les microorganismes thermophiles.

3. Procédé selon la revendication 2, caractérisé en ce qu'on fait passer le courant aqueux le long des supports solides immobiles sur lesquels sont immobilisés les microorganismes thermophiles.

4. Procédé selon la revendication 3, caractérisé en ce que le support solide immobile utilisé est la paroi d'un ou plusieurs tuyaux.

5. Procédé selon l'une ou plusieurs des revendications 1 à 4, caractérisé en ce que les bactéries thermophiles utilisées sont *Sphaerotilus natans, Haliscomenobacter hydrossis, Flavobacterium sp., Thiothrix sp.* et/ou *Beggiatoa sp..*

6. Procédé selon l'une ou plusieurs des revendications 1 à 5, caractérisé en ce qu'on utilise 0,7 à 2 m² de pellicule de microorganismes thermophiles par m³/h de débit d'eau.

7. Procédé selon l'une ou plusieurs des revendications 1 à 6, caractérisé que ce que le temps de contact utilisé entre le courant aqueux et les microorganismes thermophiles est de 20 à 100 secondes.

8. Procédé selon la revendication 7, caractérisé en ce que le temps de contact utilisé entre le courant aqueux et les microorganismes thermophiles est de 20 à 50 secondes.

9. Procédé selon l'une ou plusieurs des revendications 1 à 8, caractérisé en ce que le courant aqueux utilisé est l"eau de condenseur" engendrée dans la production du sucre.

10. Installation convenant pour mettre en oeuvre le procédé selon l'une ou plusieurs des revendications 1 à 9, caractérisé par une conduite d'arrivée, un élément relié à celle-ci et composé de tuyaux, la paroi des tuyaux étant pourvue d'une pellicule de microorganismes thermophiles aérobies, et une conduite d'évacuation.

11. Installation selon la revendication 10, caractérisée en ce que l'élément composé de tuyaux représente un ou plusieurs tuyaux qui comportent intérieurement de multiples tuyaux disposés en parallèle ayant un plus petit diamètre interne qui est compris dans l'intervalle de 20 à 50 mm.
